# NEW EUROPEAN PATENT SPECIFICATION

(11) **EP 3 140 348 B2**
(45) Date of publication and mention of the opposition decision: **29.07.2026**
(45) Mention of the grant of the patent: 05.04.2023
(21) Application number: 15718938.2
(22) Date of filing: 30.04.2015
(51) Int. Cl.: C08L 23/06, C08L 23/12

(54) **POLYPROPYLENE - POLYETHYLENE BLENDS WITH IMPROVED PROPERTIES**
POLYPROPYLENE-POLYETHYLEN MISCHUNGEN MIT VERBESSERTEN EIGENSCHAFTEN
MÉLANGES DE POLYPROPYLÈNE ET POLYÉTHYLÈNE AVEC DES PROPRIÉTÉS AMÉLIORÉES

(30) Priority: 07.05.2014 EP 14167409
(43) Date of publication of application: 15.03.2017
(73) Proprietor: Borealis GmbH, 1020 Vienna (AT)
(72) Inventor: KAHLEN, Susanne, A-4021 Linz (AT); GAHLEITNER, Markus, A-4501 Neuhofen/Krems (AT); EK, Carl-Gustaf, S-426 58 Västra Frölunda (SE); KULSHRESHTHA, Bhawna, 4020 Linz (AT); REICHELT, Norbert, A-4501 Neuhofen/Krems (AT); BAUMGÄRTEL, Gernot, A-4111 Walding (AT)
(74) Representative: Maiwald GmbH
(86) International application number: PCT/EP2015/059541
(87) International publication number: WO 2015/169690

(56) References cited:
- EP-A1- 2 338 657
- EP-A1- 2 338 657
- EP-A1- 2 348 058
- WO-A1-2007/071494
- WO-A1-2008/074715
- WO-A1-2012/152803
- GB-A- 2 345 290
- US-A1- 2006 194 924
- US-A1- 2011 105 667

## Description

The present invention is related to blends of polypropylene and polyethylene, which contain a specific kind of compatibilizer. Due to the addition of the specific compatibilizer a simultaneous increase in stiffness as well as impact strength and heat deflection resistance is achieved. Furthermore the present invention is related to recycled blends of polypropylene and polyethylene, containing the specific kind of compatibilizer.

Polyolefins, like polypropylene and polyethylene are typical commodity polymers with many application areas and a remarkable growth rate. The reason is not only a favourable price/performance ratio, but also the versatility of these materials and a very broad range of possible modifications, which allows tailoring of end-use properties in a wide range.

Chemical modifications, copolymerisation, blending, drawing, thermal treatment and combination of these techniques can convert common-grade polyolefins to valuable products with special properties.

Blends of polypropylene and polyethylene have attracted much interest. It is well known that the impact strength of polypropylene (PP) increases at low temperatures through the addition of polyethylene (PE). Unfortunately, PP and PE are highly immiscible resulting in a blend with poor adhesion among its phases, coarse morphology and consequently poor mechanical properties. The compatibility between the phases of a blend can be improved by the addition of compatibilizers, which results in a finer and more stable morphology, better adhesion between the phases of the blends and consequently better properties of the final product.

From literature several kinds of compatibilizers are known, like block copolymers, e.g. ethylene-propylene block copolymer and styrene-ethylene/butylene-styrene or triblock copolymers, or ethylene propylene rubber (EPR), ethylene/propylene diene copolymer (EPDM) or ethylene/vinyl acetate copolymer (EVA).

According to Wei Zhu et al.; Journal of Applied Polymer Science, Vol. 58, p. 515-521 (1995) the addition of ethylene - propylene copolymer as compatibilizer to blends of polypropylene and polyethylene can remedy the situation of high incompatibility to some extent and that ethylene-propylene rubber (EPR) or ethylene-propylene-diene rubber (EPDM) can substantially improve the toughness of the blends, but at the expense of deteriorated moduli and tensile strength. As improvement the authors of this paper suggest to use a PP-block-PE-copolymer prepared by sequential polymerization, whereby first propylene is polymerized and then ethylene is polymerized in the second step. The use of this compatibilizer leads to a small increase of elongation at break and tensile strength. Since the compatibilizer described has a very high molecular weight as expressed by its intrinsic viscosity its addition further leads to a significant reduction of processability as expressed by the melt flow rate (MFR).

Also according to Teh et al., Adv. Polym. Technol. Vol. 13, p. 1-23 (1994) the addition of ethylene-propylene rubber (EPR) can be used to compatibilize blends of polypropylene and polyethylene, resulting in improved toughness but lower moduli and heat resistance.

While the compatibilizers described by Zhu et al. are not commercially available, it is commonly known that both EPR and EPDM are more expensive than the respective blend components PP and PE due to a more complex production process.

For several applications, like pipes, profiles, containers, automotive components or household articles it is of high importance that the PP/PE-blends show high stiffness as well as high impact strength and heat deflection temperature.

It was therefore an objective of the present invention that these three properties of PP/PE-blends should be increased simultaneously. This objective has not yet been addressed so far in literature.

Furthermore the demand of using recycled polyolefins, originating from recovered waste plastic material derived from post-consumer and/or post-industrial waste, in a compound with virgin polymer has increased within the last years, not the least because legal requirements exist in some segments like automotive applications.

One of the key problems in polyolefin recycling, especially when dealing with material streams from post-consumer waste (PCW) is the difficulty to quantitatively separate polypropylene (PP) and polyethylene (PE). Commercial recyclates from PCW sources have been found generally to contain mixtures of PP and PE, the minor component reaching up to < 50 wt%.

Such recycled PP/PE-blends normally suffer from deteriorated mechanical and optical properties, have poor performance in odour and taste and they generally suffer from poor compatibility between the main polymer phases, resulting in both limited impact strength and heat deflection resistance. Such inferior performance is partly caused by PE with its lower stiffness and melting point forming the continuous phase even at PP concentrations up to 65% because of the normally higher viscosity of the PE components in PCW.

This normally excludes the application for high quality parts, and it only allows the use in low-cost and non-demanding applications.

It was therefore a further objective of the present invention to increase stiffness as well as impact strength and heat deflection resistance of recycled PP/PE-blends simultaneously, in order to make them suitable to be used in a compound with a virgin polymer for e.g. automotive applications.

The finding of the present invention is that with a special kind of compatibilizer being a heterophasic polyolefin composition comprising a combination of a polypropylene and a copolymer of ethylene and propylene or C₄ to C₁₀ alpha olefin, with specific properties a simultaneous increase of stiffness as well as impact strength and heat deflection resistance of virgin as well as recycled PP/PE-blends can be achieved.

Thus the present invention is directed to polypropylene-polyethylene blends comprising Component A) 75 to 90wt% of a blend ofA-1) 30 to 70wt% of polypropylene andA-2) 70 to 30wt% of polyethylene;whereby component (A) is not a heterophasic polymer,andB) 10 to 25wt% of a compatibilizer being a heterophasic polyolefin composition comprisingB-1) 55 to 90wt% of a polypropylene with an MFR2 between 1.0 and 300 g/10 min (according to ISO 1133 at 230°C at a load of 2.16 kg) andB-2) 45 to 10wt% of a copolymer of ethylene and propylene or C4 to C10 alpha olefin with a glass transition temperature Tg (measured with dynamic-mechanical thermal analysis, DMTA, according to ISO 6721-7) of below -45°C and an intrinsic viscosity (measured in decalin according to DIN ISO 1628/1 at 135°C) of at least 3.3 dl/g,whereby the blend has(i) a Charpy Notched Impact Strength (according to ISO 179-1eA, measured at 23°C) of at least 2% higher than for the same blend without the compatibilizer B)and at the same time(ii) a Flexural Modulus (according to ISO 178) of at least 3% higher than for the same blend without the compatibilizer B) and additionally(iii) a heat deflection resistance (determined with DMTA according to ISO 6721-7) expressed by the temperature at which the storage modulus G' of 40 MPa is reached (T(G' = 40 MPa)) which is at least 4°C higher than for the same blend without the compatibilizer B).

The Component A) is a recycled material, which is recovered from waste plastic material derived from post-consumer and/or post-industrial waste.

Yet a further embodiment is the use of a blend, wherein Component A) is a recycled material, which is recovered from waste plastic material derived from post-consumer and/or post-industrial waste, in a compound with one or more virgin polymers and optionally mineral fillers or reinforcing fibres. These compounds can for example be advantageously used for automotive applications.

### Component A)

Component A) of the blend of the invention comprises

A-1) 30 to 70wt% of polypropylene and
A-2) 70 to 30wt% of polyethylene. whereby component (A) is not a heterophasic polymer.

The polypropylene ofA-1) can comprise one or more polymer materials selected from the following:
I) isotactic or mainly isotactic propylene homopolymers;
II) isotactic random copolymers of propylene with ethylene and/or C4-C10 alpha-olefins, preferably ethylene and/or C4-C8 alpha-olefins, such as for example 1-butene, 1-hexene, 1-octene, 4-methyl-1-pentene, wherein the total comonomer content ranges from 0.05 to 20 wt%, or mixtures of said copolymers with isotactic or mainly isotactic propylene homopolymers;
III) heterophasic copolymers comprising an isotactic propylene homopolymer like (I) or random copolymers of propylene like (II), and an elastomeric fraction comprising copolymers of ethylene with propylene and/or a C4-C8 a-olefin, optionally containing minor amounts of a diene, such as butadiene, 1,4-hexadiene, 1,5-hexadiene, ethylidene-1-norbomene.

For example, a polypropylene suitable for use as component A-1) may have a density of from 0.895 to 0.920 g/cm³, preferably from 0.900 to 0.915 g/cm³, and more preferably from 0.905 to 0.915 g/cm³ as determined in accordance with ISO 1183 and a melt flow rate (MFR) of from 0.5 to 300 g/10min, preferably from 1.0 to 150 g/10min, and alternatively from 1.5 to 50 g/10min as determined in accordance with ISO 1133 (at 230°C; 2.16kg load). Usually the melting temperature of component A-1) is within the range of 135 to 170°C, preferably in the range of 140 to 168°C, more preferably in the range from 142 to 166°C. In case it is a propylene homopolymer like item (I) above it will generally have a melting temperature of from 150 to 170°C, preferably from 155 to 168°C, and more preferably from 160 to 165 °C as determined by differential scanning calorimetry (DSC) according to ISO 11357-3. In case it is a random copolymer of propylene like item (II) above it will generally have a melting temperature of from 130 to 162°C, preferably from 135 to 160 °C, and more preferably from 140 to 158°C as determined by DSC according to ISO 11357-3.

Preferably, the polypropylene of A-1) does not comprise a heterophasic copolymer like item (III) above.

The polyethylene of A-2) is preferably a high density polyethylene (HDPE) or a linear low density polyethylene (LLDPE) or a long-chain branched low density polyethylene (LDPE).

The comonomer content of A-2 is usually below 50 wt.% preferably below 25 wt.%, and most preferably below 15 wt.%.

Herein an HDPE suitable for use as A-2) in this disclosure has a density as determined according to ISO 1183 of equal to or greater than 0.941 g/cm³, preferably from 0.941 to 0.965 g/cm³, more preferably from 0.945 to 0.960 g/cm³. In one embodiment, the HDPE is an ethylene homopolymer. An HDPE suitable for use as A-2) in this disclosure may generally have an MFR determined by ISO 1133 (at 190°C; 2.16kg load), of from 0.01 g/10min to 50 g/10min, preferably from 0.1 to 30 g/10min, like from 0.5 to 20 g/10min.

The HDPE may also be a copolymer, for example a copolymer of ethylene with one or more alpha-olefin monomers such as propylene, butene, hexene, etc.

An LLDPE suitable for use as A-2) in this disclosure may generally have a density as determined with ISO 1183, of from 0.900 to 0.920 g/cm³, or from 0.905 to 0.918 g/cm³, or from 0.910 to 0.918 g/cm³ and an MFR determined by ISO 1133 (at 190°C; 2.16kg load), of from 0.01 to 50 g/min, or from 0.1 to 30 g/10min, like from 0.5 to 20 g/10min. The LLDPE is a copolymer, for example a copolymer of ethylene with one or more alpha-olefin monomers such as propylene, butene, hexene, etc.

An LDPE suitable for use as A-2) in this disclosure may generally have a density as determined with ISO 1183, of from 0.915 to 0.935 g/cm³, and an MFR determined by ISO 1133 (190°C; 2.16kg), of from 0.01 to 20 g/min. The LDPE is an ethylene homopolymer.

The melting temperature of component A-2) is preferably within the range of 100 to 135°C, more preferably in the range of 105 to 132°C.

Component A) is a recycled material, which is recovered from waste plastic material derived from post-consumer and/or post-industrial waste.

Such post-consumer and/or post-industrial waste can be derived from inter alia waste electrical and electronic equipment (WEEE) or end-of-life vehicles (ELV) or from differentiated waste collection schemes like the German DSD system, the Austrian ARA system or the Italian "Raccolta Differenziata" system.

The blends can be either PP-rich or PE-rich materials or blends with approximately equivalent amounts of PP and PE.

The term "waste" is used to designate polymer materials deriving from at least one cycle of processing into manufactured articles, as opposed to virgin polymers. As mentioned above, all kinds of polyethylene, preferably HDPE, LLDPE or LDPE, or polypropylene can be present.

Such recyclates are commercially available, e.g. from Corpela (Italian Consortium for the collection, recovery, recycling of packaging plastic wastes), Resource Plastics Corp. (Brampton, ON), Kruschitz GmbH, Plastics and Recycling (AT), Vogt Plastik GmbH (DE) etc..

The amounts of component A-1 and component A-2 can be from 30 to 70 wt% of the PP component A-1 and from 70 to 30 wt% of the PE component A-2, preferably 40 to 60 wt% of the PP component A-1 and 60 to 40wt% of the PE component A-2.

Component A) of the blend of the invention preferably has an MFR (230°C, 2.16 kg, ISO 1133) of 0.5 to 150 g/10 min, more preferably of 1 to 120 g/10min.

Component (A) is not a heterophasic polymer.

### Component B)

Component B) of the blend according to the invention is a heterophasic polyolefin composition comprising

B-1) 55 to 90wt% of a polypropylene with an MFR₂ (ISO 1133; 230°C; 2.16kg) between 1.0 and 300 g/10min and
B-2) 45 to 10wt% of a copolymer of ethylene and propylene or a C₄ to C₁₀ alpha olefin with a Tg (measured with DMTA according to ISO 6721-7) of below -45 °C and an intrinsic viscosity (measured in decalin according to DIN ISO 1628/1 at 135°C) of at least 3.3 dl/g.

Heterophasic polyolefin compositions are generally featured by a xylene cold soluble (XCS) fraction and a xylene cold insoluble (XCI) fraction.

For the purpose of the present application the xylene cold soluble (XCS) fraction of the heterophasic polyolefin compositions is essentially identical with Component B-2) of said heterophasic polyolefin compositions.

Accordingly when talking about the intrinsic viscosity and the ethylene content of B-2) of the heterophasic polyolefin compositions the intrinsic viscosity and the ethylene content of the xylene cold soluble (XCS) fraction of said heterophasic polyolefin compositions is meant.

Polypropylenes suitable for use as Component B-1) may include any type of isotactic or predominantly isotactic polypropylene homopolymer or random copolymer known in the art. Thus the polypropylene may be a propylene homopolymer or an isotactic random copolymer of propylene with ethylene and/or C₄ to C₈ alpha-olefins, such as for example 1-butene, 1-hexene or 1-octene, wherein the total comonomer content ranges from 0.05 to 10 wt%.

A polypropylene suitable for use as component B-1) may have a density of from 0.895 to 0.920 g/cm³, preferably from 0.900 to 0.915 g/cm³, and more preferably from 0.905 to 0.915 g/cm³ as determined in accordance with ISO 1183.

Usually component B-1) has a melting temperature of 130 to 170°C, preferably from 135 to 168°C and most preferably from 140 to 165°C.

In case it is a propylene homopolymer it will have a melting temperature of from 150 to 170°C, preferably from 155 to 168°C, like from 160 to 165 °C as determined by differential scanning calorimetry (DSC) according to ISO 11357-3. In case it is a random copolymer of propylene with ethylene and/or C₄ to C₈ alpha-olefins it will have a melting temperature of from 130 to 162°C, preferably from 135 to 160°C, like from 140 to 158 °C as determined by DSC according to ISO 11357-3.

The melt flow rate of component B-1) ranges from 1.0 to 300 g/10min, preferably from 2.0 to 200 g/10min, and more preferably from 4.0 to 150.0 g/10min, e.g. 4.5 to 150.0 g/10min as determined in accordance with ISO 1133 (230°C; 2.16kg). In one embodiment the melt flow rate of component B-1) ranges from 4.0 to 75 g/10min as determined in accordance with ISO 1133 (230°C; 2.16kg).

As Component B-2) a copolymer of ethylene and propylene or an C₄ to C₁₀ alpha olefin is used. The alpha olefin is preferably butene, hexene or octene, more preferably butene or octene and most preferably octene.

The copolymers of B-2) have a glass transition temperature Tg (measured with DMTA according to ISO 6721-7) of -45°C and an intrinsic viscosity (measured in decalin according to DIN ISO 1628/1 at 135 °C) of at 3.3 dl/g.

The glass transition temperature Tg (measured with DMTA according to ISO 6721-7) of the copolymers of B-2) is usually -65°C or above, preferably -60°C or above and most preferably -58 °Cor above.

The intrinsic viscosity (measured in decalin according to DIN ISO 1628/1 at 135 °C) of the copolymers of B-2) is usually 10.0 or less, preferably 9.0 or less and most preferably 8.5 or less.

In case the copolymer of B-2) is a copolymer of ethylene and propylene it has an ethylene content from 10 to 55 wt%, preferably from 15 to 50 wt%, more preferably from 18 to 48 wt% and most preferably from 20 to 46 wt.%.

In case the copolymer of B-2) is a copolymer of ethylene and a C₄ to C₁₀ alpha olefin it has an ethylene content from 60 to 95 wt%, preferably from 65 to 90 wt% and more preferably from 70 to 85 wt%.

Component B-2 is different from component A-2). Usually component B-2) differs from A-2) as regards their comonomer contents determined as weight percent. Preferably the comonomer content of A-2) is lower compared with the comonomer content of B-2), more preferably the comonomer content of A-2) is at least 2 percentage points lower compared with the comonomer content of B-2) and most preferably the comonomer content of A-2) is at least 5 percentage points lower compared with the comonomer content of B-2).

In the heterophasic polyolefin composition suitable as component B), B-1) is present in an amount of 55 to 90wt%, preferably in an amount of 60 to 88wt% and more preferably in an amount of 65 to 85wt% and most preferably in an amount of 65 to 80wt% and B-2) is present in an amount of 10 to 45wt%, preferably in an amount of 12 to 40wt%, more preferably in an amount of 15 to 40wt%, even more preferably in an amount of 15 to 35wt% and most preferably in an amount of 20 to 35wt%.

Component B) preferably has a content of ethylene homopolymers of not more than 10 wt.%, more preferably not more than 5 wt.% and most preferably component B) is free of ethylene homopolymers.

The heterophasic polyolefin composition suitable as component B) can be prepared by mechanical blending of component B-1) and component B-2).

Polypropylene homopolymers or copolymers suitable as component B-1) for mechanical blending are commercially available, i.a. from Borealis AG or can be prepared by known processes, like in a one stage or two stage polymerization process comprising a loop reactor or a loop reactor with subsequent gas phase reactor, in the presence of highly stereospecific Ziegler-Natta catalysts or single-site catalysts like metallocene catalysts, known to the art skilled persons.

Copolymers suitable as component B-2) for mechanical blending can be any copolymer of ethylene and propylene or ethylene and C₄ to C₁₀ alpha olefin having the above defined properties, which may be commercial available, i.a. from Borealis Plastomers (NL) under the tradename Queo^{®}, from DOW Chemical Corp (USA) under the tradename Engage^{®}, or from ENI SpA (IT).

Alternately these copolymers can be prepared by known processes, in a one stage or two stage polymerization process, comprising solution polymerization, slurry polymerisation, gas phase polymerization or combinations therefrom, in the presence of highly stereospecific Ziegler-Natta catalysts, suitable vanadium oxide catalysts or single-site catalysts like metallocene or constrained geometry catalysts, known to the art skilled persons.

In another embodiment, the heterophasic polyolefin composition suitable as component B) can be prepared by sequential polymerization, comprising at least two reactors wherein first the polypropylene B-1) is produced and secondly the copolymer B-2) is produced in the presence of the polypropylene B-1).

A preferred sequential polymerization process comprises at least one loop reactor and at least one subsequent gas phase reactor. Such a process can have up to 3 gas phase reactors.

The polypropylene polymer B-1) is produced first, i.e. in the loop reactor, and subsequently transferred to the at least one gas phase reactor, where the polymerization of ethylene, propylene or a C₄ to C₁₀ alpha olefin or mixtures therefrom takes place in the presence of the polypropylene polymer B-1). It is possible that the so produced polymer is transferred to a second gas phase reactor.

A further possibility is that the polypropylene polymer B-1) is produced in the loop reactor and the first subsequent gas phase reactor. The polypropylene polymer B-1) is then transferred to the at least second gas phase reactor where the polymerization of ethylene and propylene or a C₄ to C₁₀ alpha olefin or mixtures therefrom takes place in the presence of the polypropylene polymer B-1). It is possible that the so produced polymer is transferred to a third gas phase reactor.

In a specific embodiment the heterophasic polyolefin composition suitable as component B) is prepared by sequential polymerization comprising at least four reactors wherein first the polypropylene polymer B-1) is produced in the loop reactor and the first subsequent gas phase reactor. The polypropylene polymer B-1) is then transferred to the second gas phase reactor where the polymerization of ethylene and propylene or a C₄ to C₁₀ alpha olefin or mixtures therefrom takes place in the presence of the polypropylene polymer B-1). The so produced polymer is then transferred to the third gas phase reactor where the polymerization of ethylene and propylene or a C₄ to C₁₀ alpha olefin or mixtures therefrom takes place in the presence of the product obtained in the second gas phase reactor.

The polymerization takes place in the presence of highly stereospecific Ziegler-Natta catalysts or single-site catalysts like metallocene catalysts, known to the art skilled persons.

A suitable sequential polymerization process is, i.a. the Borstar^{®} process of Borealis AG.

Preferably the heterophasic polyolefin composition B) is produced by sequential polymerization if the copolymer B-2) is an ethylene-propylene copolymer.

If the copolymer B-2) is an ethylene-C₄ to C₁₀ alpha olefin, the heterophasic polyolefin composition B) is preferably produced by mechanical blending.

### Blends

The polypropylene-polyethylene blends A) of the present invention comprising component B) as compatibilizer have improved mechanical properties compared to blends comprising only component A).

Component A) is present in an amount from 75 to 90 wt%, preferably 80 to 90 wt% and Component B) is present in an amount from 10 to 25 wt%, preferably 10 to 20 wt%.

Components A) and B) are, thus, usually different.

Blends comprising component A) as well as component B) have increased Charpy Notched Impact Strength (according to ISO 179-1eA, measured at 23°C) as well as increased Flexural Modulus (according to ISO 178, measured at 23°C) and higher heat deflection resistance as expressed by DMTA (according to ISO 6721-7) and by heat deflection temperature (HDT, according to ISO 75) compared to blends comprising only Component A).

The Charpy Notched Impact Strength (according to ISO 179-1eA, measured at 23°C) of the blend according to the invention (comprising component A) and B)) is at least 2% higher, preferably at least 3% higher, than the Charpy Notched Impact Strength (according to ISO 179-1eA, measured at 23°C) of the same blend A) without the compatibilizer B).

At the same time the Flexural Modulus (according to ISO 178, measured at 23°C) of the blend according to the invention (comprising component A) and B)) is at least 3% higher, preferably at least 4% higher, than the same blend A) without the compatibilizer B).

Also, in the DMTA (according to ISO 6721-7) the temperature dependence of the storage modulus G' of the blend according to the invention (comprising component A) and B)) shows a higher heat deflection resistance expressed by the temperature at which a G' of 40 MPa is reached (T(G' = 40 MPa) which is at least 4°C higher, preferably at least 6°C higher, than the same blend A) without the compatibilizer B).

Preferably, the heat deflection temperature (HDT, according to ISO 75 B) of the blend according to the invention (comprising component A) and B)) is at least 3°C higher, preferably at least 4°C higher, more preferably at least 10°C higher than the same blend A) without the compatibilizer B).

The blends according to the present invention can be advantageously used in a compound with one or more virgin polymers for e.g. automotive applications, pipes or profiles for construction applications. Next to virgin polypropylene(s) and/or polyethylene(s) such a compound may further comprise inorganic or organic reinforcements like talc, glass fibres or wood fibres.

Optionally the Polypropylene-Polyethylene blends according to the present invention further comprise inorganic reinforcements agents, usually inorganic fillers. The total amount of inorganic reinforcements agents is preferably 1 to 20 wt.%, more preferably 2 to 15 wt.% based on the total amount of the Polypropylene-Polyethylene blend.

Suitable inorganic fillers are talc, chalk, clay, mica, clay, wood fibres or glass fibres and carbon fibres up to a length of 6 mm.

The mean particle size d50 of the filler may be chosen between 0.5 to 40 µm, preferably between 0.7 to 20 µm and more preferably between 1.0 to 15 µm.

The mean (or median) particle size is the particle diameter where 50% of the particles are larger and 50% are smaller. It is denoted as the d50 or D50.

In principle, this value may be determined by any particle measuring techniques, for example measuring techniques based on the principle of light diffraction.

Other techniques for determining particle sizes include, for example, granulometry in which a uniform suspension of a small quantity of the powder to be investigated is prepared in a suitable dispersion medium and is then exposed to sedimentation. The percentage distribution of the particle sizes can be estimated from the correlation between size and density of the spherical particles and their sedimentation rate as determined by Stokes law and the sedimentation time. Other methods for determining particle size include microscopy, electron microscopy, sieve analysis, sedimentation analysis, determination of the surface density and the like.

The particle size data appearing in the present specification were obtained in a well known manner with a standard test procedure employing Stokes' Law of Sedimentation by sedimentation of the particulate material in a fully dispersed condition in an aqueous medium using a Sedigraph 5100 machine as supplied by Micromeritics Instruments Corporation, Norcross, Ga., USA (telephone: +1 770 662 3620; web-site: www.micromeritics.com), referred to herein as a "Micromeritics Sedigraph 5100 unit".

Preferably talc, glass fibres or wood fibres, more preferably talc is used as inorganic filler.

Before the talc is added it may be treated with various surface treatment agents, such as organic titanate coupling agents, silane coupling agents, fatty acids, metal salts of fatty acids, fatty acid esters, and the like, in a manner known in the state of the art. The talc may also be added without surface treatment. Preferably the talc is added without surface treatment.

### Experimental part:

### 1. METHODS

**MFR** was measured according to ISO 1133 at a load of 2.16 kg, at 230°C for the pure PP components and all compositions but at 190°C for all pure PE components.

**Charpy Notched impact strength** was determined according to ISO 179 1eA at 23 ° using 80x10x4 mm³ test bars injection molded in line with EN ISO 1873-2.

**Flexural Modulus** was determined in three-point bending according to ISO 178 using 80x10x4 mm³ test bars injection molded in line with EN ISO 1873-2.

**Tensile Modulus** was determined according to ISO 527-2 (cross head speed = 50 mm/min; 23 °C) using injection molded specimens as described in EN ISO 1873-2 (dog bone shape, 4 mm thickness). **Heat Deflection Temperature (HDT)** was determined according to ISO 75 B with a load of 0.64 MPa using 80×10×4 mm³ test bars injection molded in line with EN ISO 1873-2.

**Xylene cold solubles (XCS)** content was determined at 25 °C according ISO 16152; first edition; 2005-07-01.

**Intrinsic viscosity (iV)** was measured according to DIN ISO 1628/1, October 1999 (in Decalin at 135 °C).

**Glass transition temperature Tg and storage modulus G'** were determined by dynamic mechanical analysis (DMTA) according to ISO 6721-7. The measurements were done in torsion mode on compression moulded samples (40×10×1 mm3) between -100 °C and +150 °C with a heating rate of 2 °C/min and a frequency of 1 Hz. While the Tg was determined from the curve of the loss angle (tan(δ)), the storage modulus (G') curve was used to determine the temperature for a G' of 40 MPa representing a measure for the heat deflection resistance.

**Melting temperature (Tm) and crystallization temperature (Tc)** were measured with Mettler TA820 differential scanning calorimetry (DSC) on 5 to 10 mg samples. DSC is run according to ISO 11357-3:1999 in a heat / cool / heat cycle with a scan rate of 10 °C/min in the temperature range of +23 to +210°C. Crystallization temperature and heat of crystallization (Hc) are determined from the cooling step, while melting temperature and heat of fusion (Hf) are determined from the second heating step.

**Comonomer content,** especially ethylene content is measured with Fourier transform infrared spectroscopy (FTIR) calibrated with ¹³C-NMR. When measuring the ethylene content in polypropylene, a thin film of the sample (thickness about 250 µm) was prepared by hot-pressing. The area of absorption peaks 720 and 733 cm⁻¹ for propylene-ethylene-copolymers was measured with Perkin Elmer FTIR 1600 spectrometer.

**Polyethylene content of the recyclate** was determined using the DSC technique described above for determining the Melting temperature (Tm) and crystallization temperature (Tc).

For the recyclate the polyethylene content was calculated from the PE melting enthalpy in DSC (Hm(PE)) associated to the lower melting point for the composition (Tm(PE)) in the range of 110 to 130 °C. For the determination of the present invention for fully crystalline PE a melting enthalpy of 298 J/g and an average degree of crystallinity of 50 % was assumed.

### 2. Examples

### Materials used

### Component A)

For the virgin PP/PE blend, the following two components a) and b) were used as a 1:1 blend (weight ratio):
a) HB600TF: PP homopolymer commercially available from Borealis AG, Austria, having an MFR₂ (230°C) of 2.0 g/10min, a melting point (DSC) of 165°C and a density of 0.905 g/cm³. It has been produced with a 4^{th} generation Ziegler-Natta type catalyst and is free of nucleating agents.
b) MG7547S: HDPE homopolymer commercially available from Borealis AG, Austria, having an MFR₂ of 2.0 g/10min, a melting point (DSC) of 135°C and a density of 0.945 g/cm³.

### Recycled material:

Krublend PO MFR 3.1-5.0 (regranulate grey) was used: typical polyolefin regranulate commercially available from Kruschitz GmbH, Austria, having an MFR₂ (230°C) of 3.4 g/10min, comprising approximately equal amounts of PP and PE.

Dipolen S is a recycled polymer mixture comprising polyethylene and polypropylene obtained from mtm plastics GmbH, Niedergebra, Germany and had a polyethylene content of 40 wt.% determined by DSC analysis. The melting points determined by DSC were 162°C (PP) and 128°C (PP).

Talc:
Luzenac HAR W92 with a mean (or median) particle size of 11.5 µm

### Component B)

### Compatibilizers:

### Heterophasic copolymer 1 (HECO-1):

HECO-1 was produced in a Borstar PP pilot plant with a prepolymerization reactor, one slurry loop reactor and two gas phase reactors.

The catalyst used for preparing HECO-1 has been produced as follows: First, 0.1 mol of MgCl₂ × 3 EtOH was suspended under inert conditions in 250 ml of decane in a reactor at atmospheric pressure. The solution was cooled to the temperature of -15°C and 300 ml of cold TiCl₄ was added while maintaining the temperature at said level. Then, the temperature of the slurry was increased slowly to 20 °C. At this temperature, 0.02 mol of dioctylphthalate (DOP) was added to the slurry. After the addition of the phthalate, the temperature was raised to 135 °C during 90 minutes and the slurry was allowed to stand for 60 minutes. Then, another 300 ml of TiCl₄ was added and the temperature was kept at 135 °C for 120 minutes. After this, the catalyst was filtered from the liquid and washed six times with 300 ml heptane at 80 °C. Then, the solid catalyst component was filtered and dried. (Ti-content: 1.9wt% and Mg-content: 22.0 wt%) Catalyst and its preparation concept is described in general e.g. in patent publications EP491566, EP591224 and EP586390.

The catalyst was used in combination with dicyclopentyldimethoxysilane [Si(OCH₃)₂(cyclo-pentyl)₂] as external donor (ED) and triethylaluminium (TEAL) as activator and scavenger in the ratios indicated in table 1. The catalyst was modified by polymerising a vinyl compound in the presence of the catalyst system. The respective process is described in EP 1 028 984 and EP 1 183 307.

**Table 1: Preparation of the heterophasic propylene copolymer (HECO-1)**

| **Parameter** | **unit** | **HECO-1** |
|---|---|---|
| **Prepolymerization** | | |
| temperature | [°C] | 30 |
| pressure | [kPa] | 5400 |
| TEAL/ED | [mol/mol] | 15 |
| residence time | [h] | 0.3 |

| **Loop** | | |
|---|---|---|
| temperature | [°C] | 75 |
| pressure | [kPa] | 5700 |
| residence time | [h] | 0.3 |
| ethylene feed | [kg/h] | 0 |
| H2/C3 ratio | [mol/kmol] | 12 |

| **GPR1** | | |
|---|---|---|
| temperature | [°C] | 80 |
| pressure | [kPa] | 2100 |
| residence time | [h] | 1.8 |
| ethylene feed | [kg/h] | 0 |
| H2/C3 ratio | [mol/kmol] | 18 |

| **GPR 2** | | |
|---|---|---|
| temperature | [°C] | 85 |
| pressure | [kPa] | 2000 |
| residence time | [h] | 2.1 |
| C2/C3 | [mol/kmol] | 600 |
| H2/C3 ratio | [mol/kmol] | 150 |

**Table 2: Properties of the heterophasic propylene copolymer (HECO-1) Loop, GPR1 and GPR2**

| | | **HECO-1** |
|---|---|---|
| **Loop** | | |
| split | [wt%] | 45 |
| MFR₂ | [g/10min] | 7 |
| XCS | [wt%] | 2.1 |

| **GPR1** | | |
|---|---|---|
| split | [wt%] | 41 |
| MFR₂ of PP made in GPR1 | [g/10min] | 7 |
| MFR₂ of GPR1 | [g/10min] | 7 |
| XCS of PP made in GPR1 | [wt%] | 1.9 |
| XCS of GPR1 | [wt%] | 2.0 |

| **GPR2** | | |
|---|---|---|
| split | [wt%] | 14 |
| MFR₂ of GPR2 | [g/10min] | 3.5 |
| XCS of GPR2 | [wt%] | 15 |
| iV of XS | [dl/g] | 3.4 |
| C2 of XS | [wt%] | 45 |
| Tg of XS | [°C] | -53 |

### Heterophasic copolymer 2 (HECO-2):

HECO-2 was prepared as described for HECO-1, but bypassing the 1^{st} gas phase reactor (GPR1). The specific reaction parameters can be seen in Table 3.

**Table 3: Preparation of heterophasic polypropylene (HECO-2)**

| | | **HECO-2** |
|---|---|---|
| **Prepolymerization** | | |
| temperature | [°C] | 30 |
| pressure | [kPa] | 5400 |
| TEAL/ED | [mol/mol] | 6 |
| residence time | [h] | 0.3 |

| **Loop** | | |
|---|---|---|
| H₂ amount | [mol%] | 3.89 |
| Temperature | [°C] | 85 |
| Pressure | [barg] | 51.5 |
| MFR₂ | [g/10min] | 88 |
| Split | [wt%] | 73 |

| **2. Gas phase** | | |
|---|---|---|
| H₂ amount | [mol%] | 0.00009 |
| C₂/C₃ | [mol/kmol] | 378 |
| Temperature | [°C] | 85 |
| Pressure | [barg] | 25 |
| Split | [wt%] | 27 |

| **Product** | | |
|---|---|---|
| MFR₂ | [g/10min] | 10.9 |
| XCS | [wt%] | 24.5 |
| IV of XCS | [dl/g] | 6.3 |
| C2 of XCS | [wt%] | 20.8 |
| Tg of XCS | [°C] | -32° |

### Heterophasic copolymer 3 (HECO-3):

A blend of HF955MO (PP homopolymer commercially available from Borealis AG, Austria, having an MFR₂ (230°C) of 20 g/10min, a melting point (DSC) of 165°C and a density of 0.905 g/cm³) and Queo^{®} 8210 (Ethylene/octene plastomer commercially available from Borealis AG, Austria, having an MFR2 (190°C) of 10 g/10min, a melting point (DSC) of 75°C, and a density of 0.882 g/cm³; the plastomer has a Tg (DMTA) of -45°C and an intrinsic viscosity of 3.1 dl/g) was used in varying compositions as indicated in table 4.

### Heterophasic copolymer 4 (HECO-4)

HECO-4 was produced in a Borstar^{®} PP pilot plant with a prepolymerization reactor, one slurry loop reactor and three gas phase reactors.

The catalyst used for preparing HECO-4 has been produced as follows: First, 0.1 mol of MgCl₂ × 3 EtOH was suspended under inert conditions in 250 ml of decane in a reactor at atmospheric pressure. The solution was cooled to the temperature of -15°C and 300 ml of cold TiCl₄ was added while maintaining the temperature at said level. Then, the temperature of the slurry was increased slowly to 20 °C. At this temperature, 0.02 mol of dioctylphthalate (DOP) was added to the slurry. After the addition of the phthalate, the temperature was raised to 135 °C during 90 minutes and the slurry was allowed to stand for 60 minutes. Then, another 300 ml of TiCl₄ was added and the temperature was kept at 135 °C for 120 minutes. After this, the catalyst was filtered from the liquid and washed six times with 300 ml heptane at 80 °C. Then, the solid catalyst component was filtered and dried. (Ti-content: 1.9wt% and Mg-content: 22.0wt%) Catalyst and its preparation concept is described in general e.g. in patent publications EP491566, EP591224 and EP586390.

The catalyst was used in combination with dicyclopentyldimethoxysilane [Si(OCH₃)₂(cyclo-pentyl)₂] as external donor (ED) and triethylaluminium (TEAL) as activator and scavenger in the ratios indicated in table 1. The catalyst was modified by polymerising a vinyl compound in the presence of the catalyst system. The respective process is described in EP 1 028 984 and EP 1 183 307.

**Table 4: Preparation of the heterophasic propylene copolymer (HECO-4)**

| **Parameter** | unit | HECO-4 |
|---|---|---|
| **Prepolymerization** | | |
| temperature | [°C] | 30.96 |
| pressure | [kPa] | 5588 |
| TEAL/ED | [mol/mol] | 10.30 |
| residence time | [h] | |

| **Loop** | | |
|---|---|---|
| temperature | [°C] | 76.05 |
| pressure | [kPa] | 5546 |
| residence time | [h] | 0.7 |
| ethylene feed | [kg/h] | 2.91 |
| H2/C3 ratio | [mol/kmol] | 20.64 |

| **GPR 1** | | |
|---|---|---|
| temperature | [°C] | 83.02 |
| pressure | [kPa] | 2300 |
| residence time | [h] | 1.61 |
| ethylene feed | [kg/h] | 0.15 |
| H2/C3 ratio | [mol/kmol] | 74.81 |

| **GPR2** | | |
|---|---|---|
| temperature | [°C] | 74.37 |
| pressure | [kPa] | 2037 |
| residence time | [h] | |
| C2/C3 | [mol/kmol] | 222.79 |
| H2/C3 ratio | [mol/kmol] | 3.11 |

| **GPR 3** | | |
|---|---|---|
| temperature | [°C] | 72.56 |
| pressure | [kPa] | 13.96 |
| residence time | [h] | |
| C2/C3 | [mol/kmol] | 238.54 |
| H2/C3 ratio | [mol/kmol] | |

| **Product** | | |
|---|---|---|
| MFR₂ | [g/10min] | 5.5 |
| XCS | [wt%] | 22 |
| IV of XCS | [dl/g] | 6.0 |
| C2 of XCS | [wt%] | 21 |
| T_{g} of XCS | [°C] | -38 |

The MFR (230°C, 2.16 kg, ISO 1133) of the product of GPR1 was 70 g/10 min.

### Comparative Example (CE 1)

For Comparative Example CE 1 BF970MO was used: heterophasic ethylene-propylene impact copolymer (PP-HECO) commercially available from Borealis AG, Austria, having an MFR₂ (230°C) of 20 g/10min, a melting point (DSC) of 165°C and a density of 0.905 g/cm³. The polymer has an XCS content of 17.5wt% with 34 wt% C2 and an intrinsic viscosity of 2.6 dl/g.

The blends of Component A) and Component B) were prepared on a Coperion ZSK 25 co-rotating twin-screw extruder equipped with a mixing screw configuration with an LID ratio of 25. A melt temperature of 200-220°C was used during mixing, solidifying the melt strands in a water bath followed by strand pelletization.

The amounts of the different components and the mechanical properties of the blends can be seen in Tables 4 and 5.

| **Table 4** | | | | | | | | | | | |
|---|---|---|---|---|---|---|---|---|---|---|---|
| **Ex** | **Component A** | **Component B** | **MFR 230°C/2.16kg** | **Charpy NIS 23°C** | **Δ** | **Flex. Mod.** | **Δ** | **HDT B** | **Δ** | **T (G'=40MPa)** | **Δ** |
| | | | **[g/10min]** | **[kJ/m²]** | **[%]** | **[MPa]** | **[%]** | **[°C]** | **[°C]** | **[°C]** | **[°C]** |
| **Ref 1** | 100wt%PO Krublend | - | 3.4 | 6.17 | - | 991 | - | 46 | - | 121 | - |
| **IE 1** | 85wt% PO Krublend | 15wt%HECO-1 | 2.1 | 6.42 | +4 | 1084 | +9.4 | 76 | +30 | 131 | +10 |
| **IE 2*** | 85wt% PO Krublend | 15wt%HECO-2 | 2.1 | 6.69 | +8 | 1055 | +6.4 | 77 | +31 | 130 | +9 |
| **IE 3*** | 85wt% PO Krublend | 5wt%Queo/ 10%HF955MO | 6.9 | 6.51 | +5.5 | 1068 | +7.7 | 73 | +27 | 130 | +9 |
| **CE 1** | 85wt% PO Krublend | 15wt%BF970MO | 4.7 | 5.73 | -7.1 | 1105 | +11 | 78 | +32 | 132 | +11 |
| **CE 2** | 95wt% PO Krublend | 5wt%HECO-2 | 2.1 | 5.8 | -17.3 | 1081 | +9.1 | 76 | +30 | 131 | +10 |
| **CE 3** | 85wt% PO Krublend | 10wt%Queo/ 5%HF955MO | 6.7 | 8.27 | +34 | 922 | -7.0 | 45 | -1 | 119 | -2 |
| **Ref 2** | 100wt%virgin blend | - | 5.3 | 4.69 | - | 1376 | - | 89 | - | 129 | - |
| **IE 4*** | 85wt%virgin blend | 15wt%HECO-2 | 4.9 | 6.11 | +30 | 1444 | +4.9 | 93 | +4 | 135 | +6 |
| **IE 5*** | 85wt%virgin blend | 15wt%HECO-1 | 4.9 | 5.8 | +23 | 1446 | +5.1 | 92 | +3 | 140 | +11 |

| | | | | | | | | | | | |
|---|---|---|---|---|---|---|---|---|---|---|---|
| * not according to the claims | | | | | | | | | | | |

| **Table 5** | | | | | | | | | | | | |
|---|---|---|---|---|---|---|---|---|---|---|---|---|
| **Ex** | **Comp. A** | **Comp. B** | **talc** | **MFR 230°C/2.16kg** | **Charpy NIS 23°C** | **Δ %** | **Flex. Mod.** | **Δ %** | **Tens. Mod.** | **Δ** | **HDT B** | **Δ** |
| | | | | **[g/10min]** | **[kJ/m²]** | **[%]** | **[MPa]** | **[%]** | **[MPa]** | **[%]** | **[°C]** | **[°C]** |
| **Ref2** | 100 wt.% Dipolen S | - | | 6 | 5 | - | 946 | - | 900 | - | 71 | - |
| **Ref3** | 90 wt.% Dipolen S | - | 10 wt.% | 6.98 | 4 | -20 | 1355 | 43 | 1381 | +53 | 79.5 | +8.5 |
| **Ref4** | 80 wt.% Dipolen S | - | 20 wt.% | 5.42 | 3.93 | -21 | 1929 | 104 | 1895 | +111 | 90.7 | +19.7 |
| **Ref5** | 70 wt.% Dipolen S | - | 30 wt.% | 4.42 | 2.57 | -49 | 2613 | 176 | 2489 | +177 | 98.7 | +27.7 |
| **IE6*** | 85 wt.% Dipolen S | 15 wt.% HECO-4 | --- | 7 | 8,57 | +71 | 953 | 0.7 | 1082 | +20 | 72.6 | +1.6 |
| **IE7*** | 85 wt.% Dipolen S | 10 wt.% HECO-4 | 5 wt.% | 6.7 | 7.17 | +43 | 1194 | 26 | 1248 | +38 | 78.6 | +7.6 |

| | | | | | | | | | | | | |
|---|---|---|---|---|---|---|---|---|---|---|---|---|
| * not according to the claims | | | | | | | | | | | | |

As demonstrated by Ref2 to Ref5 the addition of talc in amounts of 10, 20 and 30 wt.% leads to higher tensile and flexural modulus. However, simultaneously the Impact strength deteriorates. Using the polymer according to the present invention leads to the desired balance of good impact properties and stiffness.

## Claims

1. Polypropylene-Polyethylene blends comprising
component A) 75 to 90wt% of a blend of
A-1) 30 to 70wt% of polypropylene and
A-2) 70 to 30wt% of polyethylene;
whereby component (A) is not a heterophasic polymer, and wherein Component A) is a recycled material, which is recovered from waste plastic material derived from post-consumer and/or post-industrial waste,
and
B) 10 to 25wt% of a compatibilizer being a heterophasic polyolefin composition comprising
B-1) 55 to 90wt% of a polypropylene with an MFR₂ between 1.0 and 300 g/10 min (according to ISO 1133 at 230°C at a load of 2.16 kg) and
B-2) 45 to 10wt% of a copolymer of ethylene and propylene or C₄ to C₁₀ alpha olefin with a glass transition temperature Tg (measured with dynamic-mechanical thermal analysis, DMTA, according to ISO 6721-7) of below -45°C and an intrinsic viscosity (measured in decalin according to DIN ISO 1628/1 at 135°C) of at least 3.3 dl/g,
whereby the blend has
(i) a Charpy Notched Impact Strength (according to ISO 179-1eA, measured at 23°C) of at least 2% higher than for the same blend without the compatibilizer B)
and at the same time
(ii) a Flexural Modulus (according to ISO 178) of at least 3% higher than for the same blend without the compatibilizer B) and additionally
(iii) a heat deflection resistance (determined with DMTA according to ISO 6721-7) expressed by the temperature at which the storage modulus G' of 40 MPa is reached (T(G' = 40 MPa)) which is at least 4°C higher than for the same blend without the compatibilizer B).

2. Polypropylene-Polyethylene blends according to claim 1 having a heat deflection temperature (HDT, according to ISO 75 B) of at least 3°C higher, than the same blend without the compatibilizer B).

3. Polypropylene-Polyethylene blends according to any of preceding claims 1 to 2,
wherein Component B-1) is selected from isotactic or predominantly isotactic polypropylene homopolymer or random copolymers of propylene with ethylene and/or C₄ to C₈ alpha-olefins, wherein the total comonomer content ranges from 0.05 to 10 wt%, whereby the polypropylenes have a density of from 0.895 to 0.920 g/cm³ (in accordance with ISO 1183) and,
in case of propylene homopolymers, have a melting temperature of from 150 to 170°C, (determined by differential scanning calorimetry (DSC) according to ISO 11357-3) and, in case of random copolymers of propylene with ethylene and/or C₄ to C₈ alpha-olefins, have a melting temperature of from 130 to 162°C (determined by DSC according to ISO 11357-3).

4. Polypropylene-Polyethylene blends according to any of preceding claims 1 to 3,
wherein Component B) is selected from
(i) an in-reactor blend obtained by a sequential polymerization process in at least two reactors, whereby first the polypropylene B-1) is produced and secondly a copolymer B-2) of ethylene and propylene is produced in the presence of the polypropylene B-1) or
(ii) a mechanical blend of a polypropylene B-1) and a copolymer B-2) of ethylene and C₄ to C₁₀ alpha olefin.

5. Polypropylene-Polyethylene blends according to any of preceding claims 1 to 4, wherein Component A) is present in an amount of 80 to 90wt% and Component B) is present in an amount of 10 to 20wt%.

6. Polypropylene-Polyethylene blends according to any of preceding claims 1 to 5, wherein in Component B), Component B-1) is present in an amount of 60 to 88wt% and Component B2) is present in an amount of 12 to 40 wt%.

7. Use of a blend according to any of preceding claims 1 to 5 in a compound with one or more virgin polymers for automotive applications, pipes or profiles for construction applications.

8. Use according to claim 7, whereby such a compound may further comprise inorganic or organic reinforcements selected from talc, glass fibres or wood fibres.

## Patentansprüche

1. Polypropylen-Polyethylen-Mischungen, bestehend aus
Komponente A) 75 bis 90 Gew.-% einer Mischung aus
A-1) 30 bis 70 Gew.-% Polypropylen und
A-2) 70 bis 30 Gew.-% Polyethylen;
wobei die Komponente (A) kein heterophasisches Polymer ist, und ein recyceltes Material ist, das aus Kunststoffabfällen gewonnen wird, die aus post-consumer und/oder post-industriellen Abfällen stammen.
und
B) 10 bis 25 Gew.-% eines Kompatibilisierungsmittels, das eine heterophasige Polyolefin-Zusammensetzung ist, umfassend
B-1) 55 bis 90 Gew.-% eines Polypropylens mit einer MFR₂ zwischen 1,0 und 300 g/10 min (gemäß ISO 1133 bei 230°C und einer Last von 2,16 kg) und
B-2) 45 bis 10 Gew.-% eines Copolymers aus Ethylen und Propylen oder C₄ bis C₁₀ alpha-Olefin mit einer Glasübergangstemperatur Tg (gemessen mit dynamischmechanischer Thermoanalyse, DMTA, nach ISO 6721-7) von unter -45°C und einer intrinsischen Viskosität (gemessen in Decalin nach DIN ISO 1628/1 bei 135°C) von mindestens 3,3 dl/g,
wobei die Mischung folgende Eigenschaften aufweist
(i) eine Charpy-Kerbschlagzähigkeit (nach ISO 179-1eA, gemessen bei 23 °C), die mindestens 2 % höher ist als die der gleichen Mischung ohne das Kompatibilisierungsmittel B)
und zur gleichen Zeit
(ii) einen Biegemodul (nach ISO 178), der mindestens 3 % höher ist als bei derselben Mischung ohne das Kompatibilisierungsmittel B) und zusätzlich
(iii) eine Wärmeformbeständigkeit (bestimmt mit DMTA gemäß ISO 6721-7), ausgedrückt durch die Temperatur, bei der der Speichermodul G' von 40 MPa erreicht wird (T(G' = 40 MPa)), die mindestens 4°C höher ist als bei der gleichen Mischung ohne das Kompatibilisierungsmittel B).

2. Polypropylen-Polyethylen-Mischungen nach Anspruch 1 mit einer Wärmeformbeständigkeitstemperatur (HDT, gemäß ISO 75 B) von mindestens 3°C höher als die gleiche Mischung ohne das Kompatibilisierungsmittel B).

3. Polypropylen-Polyethylen-Mischungen nach einem der vorhergehenden Ansprüche 1 bis 2, wobei die Komponente B-1) ausgewählt ist aus isotaktischem oder überwiegend isotaktischem Polypropylen-Homopolymer oder statistischen Copolymeren von Propylen mit Ethylen und/oder C₄ bis C₈ alpha-Olefinen, wobei der Gesamtgehalt an Comonomeren im Bereich von 0,05 bis 10 Gew.-% liegt, wobei die Polypropylene eine Dichte von 0,895 bis 0,920 g/cm³ (gemäß ISO 1183) aufweisen und,
im Falle von Propylen-Homopolymeren eine Schmelztemperatur von 150 bis 170°C (bestimmt durch Differential-Scanning-Kalorimetrie (DSC) gemäß ISO 11357-3) und im Falle von statistischen Copolymeren von Propylen mit Ethylen und/oder C₄ bis C₈ alpha-Olefinen eine Schmelztemperatur von 130 bis 162°C (bestimmt durch DSC gemäß ISO 11357-3) aufweisen.

4. Polypropylen-Polyethylen-Mischungen nach einem der vorhergehenden Ansprüche 1 bis 3, wobei die Komponente B) ausgewählt ist aus
(i) einer Reaktor-Mischung, welche durch ein sequentielles Polymerisationsverfahren in mindestens zwei Reaktoren erhalten wird, wobei zunächst das Polypropylen B-1) hergestellt wird und anschließend ein Copolymer B-2) aus Ethylen und Propylen in Gegenwart des Polypropylens B-1) hergestellt wird, oder
(ii) eine mechanische Mischung aus einem Polypropylen B-1) und einem Copolymer B-2) aus Ethylen und C₄ bis C₁₀ alpha-Olefin.

5. Polypropylen-Polyethylen-Mischungen nach einem der vorhergehenden Ansprüche 1 bis 4, wobei die Komponente A) in einer Menge von 80 bis 90 Gew.-% und die Komponente B) in einer Menge von 10 bis 20 Gew.-% vorhanden ist.

6. Polypropylen-Polyethylen-Mischungen nach einem der vorhergehenden Ansprüche 1 bis 5, wobei in der Komponente B) die Komponente B-1) in einer Menge von 60 bis 88 Gew.-% und die Komponente B2) in einer Menge von 12 bis 40 Gew.-% vorhanden ist.

7. Verwendung einer Mischung nach einem der vorhergehenden Ansprüche 1 bis 5 in einer Verbindung mit einem oder mehreren neu-produzierten Polymeren für Automobilanwendungen, Rohre oder Profile für Bauanwendungen.

8. Verwendung nach Anspruch 7, wobei die Verbindung ferner anorganische oder organische Verstärkungen, ausgewählt aus Talkum, Glasfasern oder Holzfasern, enthalten kann.

## Revendications

1. Mélanges de polypropylène-polyéthylène comprenant
composant A) 75 à 90 % en poids d'un mélange de
A-1) 30 à 70 % en poids de polypropylène et
A-2) 70 à 30 % en poids de polyéthylène ;
moyennant quoi le composant (A) n'est pas un polymère hétérophasique, et dans lesquels le composant A) est un matériau recyclé, qui est récupéré à partir de déchets plastiques dérivés de déchets de consommation et/ou industriels,
et
B) 10 à 25 % en poids d'un agent de compatibilité qui est une composition de polyoléfine hétérophasique comprenant
B-1) 55 à 90 % en poids d'un polypropylène ayant un MFR₂ (conformément à la norme ISO 1133 à 230°C sous une charge de 2,16 kg) compris entre 1,0 et 300 g/10 min et
B-2) 45 à 10 % en poids d'un copolymère d'éthylène et de propylène ou d'alpha-oléfine en C₄ à C₁₀ ayant une température de transition vitreuse Tg (mesurée par analyse thermomécanique dynamique, DMTA, conformément à la norme ISO 6721-7) inférieure à -45°C et une viscosité intrinsèque (mesurée dans la décaline conformément à la norme DIN ISO 1628/1 à 135°C) d'au moins 3,3 dl/g,
moyennant quoi le mélange a
(i) une résistance au choc Charpy sur barreau entaillé (conformément à la norme ISO 179-1eA, mesurée à 23°C) supérieure d'au moins 2 % à celle pour le même mélange sans l'agent de compatibilité B)
et en même temps
(ii) un module de flexion (conformément à la norme ISO 178) supérieur d'au moins 3 % à celui pour le même mélange sans l'agent de compatibilité B) et de plus
(iii) une résistance à la déformation thermique (déterminée par DMTA conformément à la norme ISO 6721-7), exprimée par la température à laquelle un module de stockage G' de 40 MPa est atteint (T(G' = 40 MPa)) qui est supérieure d'au moins 4°C à celle pour le même mélange sans l'agent de compatibilité B).

2. Mélanges de polypropylène-polyéthylène selon la revendication 1, ayant une température de déformation thermique (HDT, conformément à la norme ISO 75 B) supérieure d'au moins 3°C à celle pour le même mélange sans l'agent de compatibilité B).

3. Mélanges de polypropylène-polyéthylène selon la revendication 1 ou 2, dans lesquels le composant B-1) est choisi parmi les homopolymères de polypropylène isotactiques ou majoritairement isotactiques et les copolymères aléatoires de propylène et d'éthylène et/ou d'alpha-oléfines en C₄ à C₈, dans lesquels la teneur totale en comonomères est dans la plage de 0,05 à 10 % en poids, moyennant quoi les polypropylènes ont une masse volumique de 0,895 à 0,920 g/cm³ (conformément à la norme ISO 1183) et,
dans le cas des homopolymères de propylène, ceux-ci ont un point de fusion de 150 à 170°C (déterminé par calorimétrie à balayage différentiel (DSC) conformément à la norme ISO 11357-3) et, dans le cas des copolymères aléatoires de propylène et d'éthylène et/ou d'alpha-oléfines en C₄ à C₈, ceux-ci ont un point de fusion de 130 à 162°C (déterminé par DSC conformément à la norme ISO 11357-3).

4. Mélanges de polypropylène-polyéthylène selon l'une quelconque des revendications 1 à 3, dans lesquels le composant B) est choisi parmi
(i) un mélange en réacteur obtenu par un procédé de polymérisation en séquence dans au moins deux réacteurs, moyennant quoi premièrement le polypropylène B-1) est produit et deuxièmement un copolymère B-2) d'éthylène et de propylène est produit en présence du polypropylène B-1) ou
(ii) un mélange mécanique d'un polypropylène B-1) et d'un copolymère B-2) d'éthylène et d'alpha-oléfine en C₄ à C₁₀.

5. Mélanges de polypropylène-polyéthylène selon l'une quelconque des revendications 1 à 4, dans lesquels le composant A) est présent en une quantité de 80 à 90 % en poids et le composant B) est présent en une quantité de 10 à 20 % en poids.

6. Mélanges de polypropylène-polyéthylène selon l'une quelconque des revendications 1 à 5, dans lesquels, dans le composant B), le composant B-1) est présent en une quantité de 60 à 88 % en poids et le composant B-2) est présent en une quantité de 12 à 40 % en poids.

7. Utilisation d'un mélange selon l'une quelconque des revendications 1 à 5 dans un composé avec un ou plusieurs polymères vierges pour des applications à l'automobile, des tuyaux ou des profilés pour des applications de construction.

8. Utilisation selon la revendication 7, dans laquelle un tel composé peut en outre comprendre des renforcements inorganiques ou organiques choisis parmi le talc, les fibres de verre et les fibres de bois.
